# EUROPEAN PATENT APPLICATION

(11) **EP 2 091 205 A1**
(43) Date of publication of application: **19.08.2009**
(21) Application number: 08101628.9
(22) Date of filing: 14.02.2008
(51) Int. Cl.: H04L 29/06

(54) **Method and an apparatus for delivering a video stream**

(71) Applicant: NTT DoCoMo, Inc., Tokyo (JP)
(72) Inventor: Aad, Imad, 80689 Munich (DE); Berndt, Hendrik, 85399 Hallbergmoose (DE)
(74) Representative: Betten & Resch

(57) **Abstract**

A method for delivering a packet-based video stream from a server to one or more users, wherein there exists a scene priority indicator file which for each video scene contains priority indications which are synchronized to the movie scenes and which indicate for a given video scene the priority of the video scene, said method comprising:
reading by the video streaming application a scene priority indicator file which for each video scene contains a corresponding scene priority indication, said corresponding scene priority indications being synchronized to the movie scenes to enable the identification of the priority indication belonging to a certain packet to be transmitted by said video stream, where a scene priority indication indicates for a given video scene the priority of the video scene;
inserting the priority indications which have been read out from said scene priority indicator file into their corresponding packets of the video stream;
adapting the handling of a packet based on said priority indication such that the delivery of a video packet having assigned a higher priority is more robust against congestions or channel degradations than the delivery of a video packet having assigned a lower priority.

## Description

### FIELD OF INVENTION

The present invention relates to a method and an apparatus for delivering a video stream from a server to one or more users.

### BACKGROUND OF THE INVENTION

There are several known methods which deal with the problem of video quality degradation, due to congestion and channel quality degradation.

One may split most of the existing techniques into two groups:
1. Methods that make the application adapt to the network/channel conditions, e.g. by changing the video coding technique.
2. Methods that make the lower network stacks (e.g. network layer, MAC layer, PHY layer), adapt to the requirements of the application, i.e. the importance of the packet to be transmitted.

In the first group, lower layers make the application aware of the available data rate, error rate etc., so that the application adapts the video encoding accordingly. Some examples of the first group will be given in the following.

In Mihaela Schaar and Deepak Turaga, "System and method for providing video content and concealment dependent error protection and scheduling algorithms", US patent 2007053445, the authors propose a system for adaptively changing the error protection strategy for a digital video transmission depending upon the characteristics of a transmission channel. Similarly, the authors in Huanying Zou, Chuang Lin, Hao Yin, Zhen Chen, "Optimal Priority Packetization with Multi-layer UEP for Video Streaming over Wireless Network", in advances in multimedia information processing, PCM 2006, propose a method where priority packetization combined with multi-layer unequal error protection (UEP) is applied on video frames Multi-layer UEP contains low-complexity duplication of high-priority packet in application layer and different retransmission limit in media access control layer Content-aware rate-distortion optimization is also introduced in order to countermine the distortion caused by bit errors.

In Zhijun Lei and Nicolas D. Georganas, "Adaptive video transcoding and streaming over wireless channels", in Journal of Systems and Software, special issue on Adaptive multimedia computing, Vol. 75, Issue 3, 2005, the authors investigate the problem of bit rate adaptation transcoding for transmitting pre-encoded VBR video over burst-error wireless channels, i.e., channels such that errors tend to occur in clusters during fading periods. With the acknowledgments received through the feedback channel and a statistical channel model, the authors have an estimate of the current channel state, and effective channel bandwidth Based on the channel constraints and source video characteristics, they propose a bit rate adaptation algorithm for transcoding and transmitting pre-encoded VBR video stream over wireless channel. Moreover, by controlling the frame bit budget according to the channel conditions and buffer occupancy, the initial startup delay of streaming pre-encoded video can be significantly reduced.

In L Cao, and C.W. Chen, "Scene adaptive multiple coding scheme for robust image transmission", in proc. of WCNC, 2000, the authors propose a combined source and channel coding scheme for image transmission over noisy channels The key component is extracting and preserving the scene information and incorporating it with unequal error protection to combat the channel errors. After hierarchical wavelet decomposition of the image, wavelet coefficients with a parent-child relationship are grouped into wavelet blocks and classified according to corresponding scenes in the original image In order to combat the channel errors, an unequal error protection strategy implemented by RCPC/CRC channel coding is designed based on the bit contribution to both PSNR and human visual sensitivity. The results show that the proposed scheme is able to provide protection for more important bits and more important visual content under a noisy transmission environment. In particular, the reconstructed images illustrate consistently better visual quality.

In the second group, the application assigns the priority for the packets it generates, so the lower layers adapt accordingly. However, most of the existing techniques found in the literature consider priorities/differentiation made by the application to be "automatic", encoder related, such as I- and B-frames in MPEG videos, control information, shape information, motion information, and texture information (see e.g. Huai-Rong Shao, and Ya-Qin Zhang, "User and content aware object-based data stream transmission methods and arrangements", US patent 7093028). In Xiaofeng Xu, M. van der Schaar, S. Krishnamachari, Sunghyun Choi, and Yao Wang, "Adaptive error control for fine-granular-scalability video coding over IEEE 802.11 wireless LANs", in proc. of ICME, 2003, the authors evaluate and compare various error control strategies, namely, medium access control (MAC) layer forward error correction (FEC), MAC retransmission, and application-layer FEC, combined with FGS (Fine Granular Scalability) video coding to achieve reliable communication over the IEEE 802.11 WLANs. The performance of cross-layer strategies such as application-layer FEC with MAC retransmissions is also determined.

"Layered video coding using perceptual coding criteria for error resilience in packet networks" (United States Patent 6233283) relates the the category of application adapting the packet priority before sending it into the network, based on the human perception of the errors: In order to define the priority of a packet, the encoder injects errors into the packets. If the resulting quality is perceivable to a human (defined by a preprocessor), the packet is encoded with higher priority video layer. Else, low priority is used

In D. Cotroneo, G. Paolillo, C. Pirro, S. Russo, "A user-driven adaptation strategy for mobile video streaming applications", in Proc. of IEEE International Conference on Distributed Computing Systems Workshops, 2005, the authors propose a video adaptation strategy for real-time multimedia applications, which exploits a spatial reduction technique This technique is suitable for all applications having the need to deliver the best video quality for a particular region of the frame, irrespective of remaining contour Examples of these applications are those concerning video surveillance. For such applications, it is more important to guarantee the delivery of the only user-selected portion than to deliver the entire, but degraded, video frame when the network conditions are no longer sufficient A similar approach can be found in Haohong Wang, Khaled Helmi EI-Maleh, and Yi Liang, "Content-adaptive background skipping for region-of-interest video coding, US patent 20060204113.

### SUMMARY OF THE INVENTION

According to one embodiment there is provided a method for delivering a packet-based video stream from a server to one or more users, wherein there exists a scene priority indicator file which for each video scene contains priority indications which are synchronized to the movie scenes and which indicate for a given video scene the priority of the video scene, said method comprising:
reading by the video streaming application a scene priority indicator file which for each video scene contains a corresponding scene priority indication, said corresponding scene priority indications being synchronized to the movie scenes to enable the identification of the priority indication belonging to a certain packet to be transmitted by said video stream, where a scene priority indication indicates for a given video scene the priority of the video scene;
inserting the priority indications which have been read out from said scene priority indicator file into their corresponding packets of the video stream;
adapting the handling of a packet based on said priority indication such that the delivery of a video packet having assigned a higher priority is more robust against congestions or channel degradations than the delivery of a video packet having assigned a lower priority.

By reading the scene priority indicator file, inserting the priority indications into the packets and then treating the packets in accordance with their priority to achieve a more robust delivery for high priority packets it becomes possible to enhance the operative capability of a streaming mechanism. While important scenes can be more reliably delivered to the user the mechanism nevertheless makes an efficient use of the additional resources necessary for such a more robust delivery by adapting the delivery mechanism to the priority of the scenes.

According to one embodiment said priority indications in said scene priority indicator file are time stamped to be synchronised with the respective scenes of the video, and/or
said said scene priority indicator comprises a start time indication, an end time indication and a scene priority indicator for each scene which has assigned a priority

In this manner the packets can be identified into which a certain priority indication has to be inserted.

According to one embodiment said scene priority indications are quantized values ranging between a minimum value indicating minimum priority and a maximum value indicating maximum priority, and said adapting is performed such that the higher the priority which is assigned to the packet the more robust the packet delivery is for said packet.

This enables an adaptation having a fine granularity to the importance of the scenes, depending on the range between the minimum and the maximum values of the priority indications.

According to one embodiment said priority indications are inserted into the type of service fields of the packets, and/or
said adapting the handling of a packet based on said priority indication is performed in multiple network layers.

This makes use of the structure of IP packets for priority based differentiation of services, and the adaptation at multiple network layers increases the positive effect of the adaptation mechanism compared to an adaptation performed at a single network layer.

According to one embodiment said adapting comprises one or more of the following:
adapting the error correction coding method to use a stronger error correction for those packets having a higher priority;
assigning appropriate IP and/or MAC priority parameters in accordance with the priority indications, to decrease the end-to-end delays and reduce the packet loss rate for high priority packets;
choosing a suitable radio modulation method depending on the priority of the packet to be transmitted by choosing for higher priority packets a modulation method which is more resilient for higher priority packets.

The mentioned options for adaptation can be used for suitably adapting the delivery mechanism to the priority of the packets. Based on the priority indications which are assigned to the packets at the application layer there are assigned corresponding priority parameters at the lower levels for appropriate handling at lower levels (such as IP or MAC layer). For example, the priority indications may be written at the application layer into the TOS field of a packet, and based thereupon the handling at the lower levels (IP or MAC layer) is performed accordingly

According to one embodiment there is provided an apparatus for delivering a packet-based video stream from a server to one or more users, wherein there exists a scene priority indicator file which for each video scene contains priority indications which are synchronized to the movie scenes and which indicate for a given video scene the priority of the video scene, said apparatus comprising:
a module for reading by the video streaming application a scene priority indicator file which for each video scene contains a corresponding scene priority indication, said corresponding scene priority indications being synchronized to the movie scenes to enable the identification of the priority indication belonging to a certain packet to be transmitted by said video stream, where a scene priority indication indicates for a given video scene the priority of the video scene;
a module for inserting the priority indications which have been read out from said scene priority indicator file into their corresponding packets of the video stream;
a module for adapting the handling of a packet based on said priority indication such that the delivery of a video packet having assigned a higher priority is more robust against congestions or channel degradations than the delivery of a video packet having assigned a lower priority.

According to one embodiment said module for adapting comprises one or more of the following
a module for adapting the error correction coding method to use a stronger error correction for those packets having a higher priority;
a module for assigning appropriate IP and/or MAC priority parameters in accordance with the priority indications, to decrease the end-to-end delays and reduce the packet loss rate for high priority packets;
a module for choosing a suitable radio modulation method depending on the priority of the packet to be transmitted by choosing for higher priority packets a modulation method which is more resilient for higher priority packets

According to one embodiment there is provided a computer program comprising program code which when being executed on a computer enables said computer to carry out a method according to one of the embodiments of the invention.

### DESCRIPTION OF THE DRAWINGS

Fig 1 schematically illustrates an environment in which an embodiment of the invention may be used.
Fig. 2 schematically illustrates the insertion of priority indications into packets according to an embodiment of the invention
Fig. 3 schematically illustrates an adapting procedure according to an embodiment of the invention.

### DETAILED DESCRIPTION

In the following embodiments of the invention will be described.

According to one embodiment there is made use of temporal prioritization of video image parts based on "scene importance". The notion of making the application and/or eventually the underlying stacks aware of the temporal "scene importance" of the video stream enables the delivery system of the streamed video to improve the likelihood with which high priority scenes are delivered to the user, despite possible biases which could negatively affect the delivery. Compared to those scenes where the priority is lower, the scenes having a higher priority are treated such that they have a higher likelihood of being correctly delivered to the end user

The methods for achieving such a high priority delivery of important scenes of the embodiments of the invention can be used in combination with the above mentioned techniques of the prior art, in particular also with other differentiation methods (e.g. different priorities for I- and B-frames in MPEG).

According to one embodiment every movie to be streamed is accompanied with a "scene priority indicator file" (SPIF) The indexes or priority indications in the SPIF are synchronized to the movie scenes. The streaming application, at the server side, reads the SPIF and assigns the video packet priorities accordingly. These packet priorities are used at lower layers (network, MAC, or PHY layers) to make the packet transmission more robust against congestions and channel degradations (e.g. lower bitrate coding). More robustness usually comes at the cost of consuming more network resources (e.g. bandwidth). However this helps "crucial scenes" in a movie to reach the end user's terminal without being degraded or interrupted by sporadic poor network or channel conditions (e.g. user moving in a train).

In this manner the risk of video/audio quality degradation during important scenes of a movie/audio being streamed can be reduced.

In the following further embodiments of the invention will be described

Video and audio streaming have specific transmission requirements because of tight time constraints. If they are broadcast or multicast, reliability depends solely on forward error correction (FEC) since it is not possible to retransmit packets that were not received by one or several users with bad channel conditions Retransmissions, typically at the MAC layer, would degrade the quality perceived by the other users with good channel conditions.

When streaming with unicast, retransmissions are possible, increasing reliability, at the cost of additional delays at the receiver side. To overcome the impact of such delays, applications usually buffer part of the videos before displaying them This enhances the perceived video quality, at the cost of additional delays

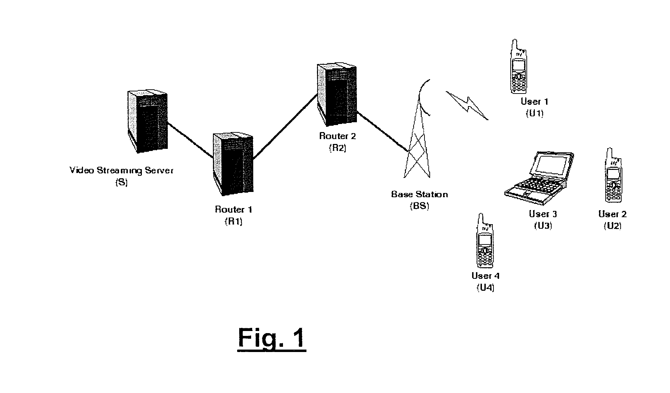

Without loss of generality, referring to Fig. 1 there will now be considered the case of video broadcast and multicast in an IP network. The same technique serves for audio streaming, unicast etc. without major changes.

Fig 1 shows a group of users watching a movie being streamed from a server (S), through a wireless base station (BS). The various users typically have different channel conditions and the BS cannot adapt to everyone's conditions. Adapting to the user with the worst channel conditions consumes the network resources, and degrades the whole system's performance. Adapting to the users with the best conditions leaves the other users unsatisfied. Several prior art approaches tackle this problem to define the best operating points.

Irrelevant of the choice of the operating point, however, the present invention according to one embodiment adds a further functionality to the existing approaches, namely to make the streaming application aware of the importance of the video scene and to assign the packet priority accordingly. This priority, which may e.g. be specified in the packet header, can then be used in intermediate routers and in the BS to make the lower layers (IP, MAC, PHY) treat the packet with high priority (e.g. more robust modulation, lower delays). This decreases the risk of having, for instance, a user watching the movie on his mobile device in a train, entering a tunnel, wondering "did the hero die or not at the end?!"

The mechanism according to one embodiment comprises using a Scene Priority Indicator File (SPIF) that, just like subtitle files, comes with the movie to be streamed. The preparation of such a file is typically non-automatic, human-made, based on the importance of the various scenes in the movie. However, one can also consider automatic method for significant scene extraction like in Takako Hashimoto, Takashi Katooka, Atsushi lizawa, and Hiroyuki Kitagawa, "Significant Scene Extraction Method Using Situation Importance", in proc, of the International Conference on Distributed Computing Systems Workshops - W1: MNSA (ICDCSW), 2004. The indexes or indications in the SPIF according to one embodiment are time-stamped, just like in subtitle files, to be synchronized with the various scenes of the movie. In this manner it becomes possible to identify for a packet of the video stream the corresponding scene priority indicator given by the SPIF. An example of how the SPIF may be composed is given in the following:
Scene number
Start time --> End time
SPI value
Blank line

For each scene (or at least for each scene which is to be labeled or assigned a certain priority) according to one embodiment the SPIF then comprises a "block" which assigns a priority to the corresponding scene. A block may e.g. consist of the four lines shown above, namely a sequence number of the scene (which may be optional), a start time indication and an end time indication for the scene, the SPI value of the scene, and then (optionally) a blank line. The concrete format of the individual blocks may be subject to modifications, as long as each block indicates in an identifiable manner the priority or importance of the scene to which it corresponds.

The SPI (scene priority indicator) in one embodiment is a quantized value (e.g, between 0 and 15, in order to fit in the 4-bit ToS field of an IPv4 packet) determined by a viewer, the producing company, or the video streaming service provider and stored in the SPIF prior to the movie streaming The value of the SPI indicates the priority or importance of the scene While it may lie between 0 and 15, other embodiments may also choose other values or boundaries for the SPI. The most simple one would be a simple bit which is either 0 or 1 and indicates whether the scene is important (SPI=1) or not (SPI=0). It will be apparent for the skilled person that a finer granularity of the SPI with a larger number of intermediate values between the value indicating the highest and the lowest priority will enable the mechanism to adapt the treatment of the scenes more finely than if a distinction were made just between important (SPI=1) and unimportant (SPI=0) A value of the SPI between 0 and 15 is a preferred choice because it fits into the 4-bit ToS field of an IP packet.

The SPIF can be a file separate from the video file, and as mentioned it can be generated manually (by assigning the priorities to the scenes manually through an operator) or automatically by using a suitable mechanism as mentioned before. Once the SPIF has been created, the video streaming mechanism may use it to adapt its handling of the video to the priorities of different scenes.

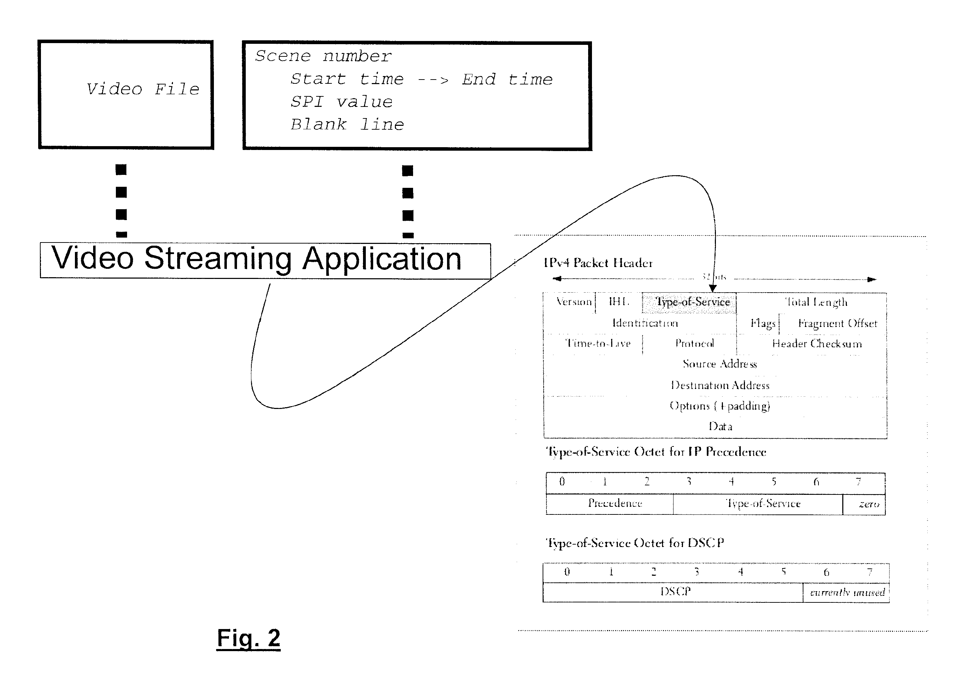

According to one embodiment the streaming application reads the SPIF, together with the video, and assigns the scene priorities to the packets being transmitted (e.g. using the ToS field in IP packets). This is schematically illustrated in Fig. 2.
Fig 2 shows the video streaming application which is running at the video server and receives the video file to be streamed and the SPIF (of which one block is shown exemplarily in Fig. 2). Based on these inputs the video streaming application then identifies the priorities of the individual scenes by reading the SPIF, and it then inserts the scene priority indicator SPI into the packets of the video which belong to the scene to which the SPI corresponds. In this manner the video packets are "enriched" by some scene priority indication which is then used to suitably adapt the streaming procedure or the delivery mechanism for the video packets to the priority of the scenes in order to make sure that scenes with higher priority are more likely to be reserved correctly than scenes with lower priority This can be done by choosing adaptations in the delivery mechanism or the streaming mechanism which make the delivery of the video packets less prone to errors or distortions for packets having assigned a higher priority. Thereby the delivery of high priority packets becomes more robust against congestions or channel degradations.

This can be achieved by a plurality of adaptations based on the SPI which can be applied individually or in combination. Some examples of adaptations of the video streaming mechanism of the packet delivery mechanism will now be explained in the following in somewhat more detail.

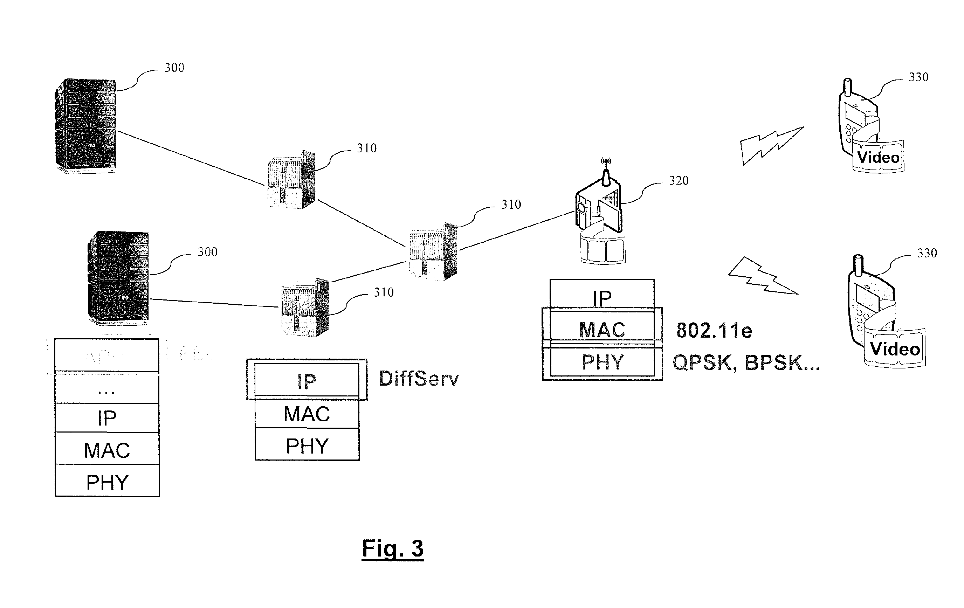

Some examples of these adaptations are now explained in the following in connection with Fig. 3. It shows a scenario where two video streaming servers 300 forward video streams through wired routers 310 and wireless router (or base station) 320 towards mobile terminals 330 where end users may watch the videos. Fig. 3 in addition to the devices involved also shows in part their corresponding protocol stack where the layers at which adaptations are performed are marked by an additional rectangle around the corresponding layer, with an indication on the right-hand side of the type of adaptation being performed. The adaptations made according to one embodiment in this scenario may therefore comprise the following
- at the application on the server 300: to adapt the source-coding, e.g. by performing a stronger or weaker forward error correction (FEC), where the overhead/redundancy varies accordingly. Higher priority packets are then encoded using a stronger (more redundant) FEC method, while for lower priority packets the redundancy or resilience of the used FEC method is lower, thereby being less resilient against transmission errors or distortions. As illustrated in Fig 3 by FEC right to the application layer of the server, such an adaptation may be performed at the application layer by choosing a suitable error correction method (such as FEC and a corresponding robustness or redundancy level) in accordance with the packet priority as indicated by the SPI.
- at the intermediate wired routers 310: to assign the proper or appropriate IP and MAC priority parameters in accordance with the priority indications, to decrease the end-to-end delays and reduce the packet loss rate for high priority packets. This can be done e.g. by applying any mechanism which is capable of handling packets based on their priority. A mechanism capable of such a handling at the IP layer is e.g. the DiffServ mechanism which is schematically shown in Fig 3 next to the IP layer. Also at the MAC (medium access control) layer any suitable mechanism for handling packets according to their priority can be employed.
- at the (intermediate) wireless router 320 the wireless router may employ the same or similar mechanisms as the wired routers for differentiated handling of packets according to their priority. E.g. for an adaptation at the MAC layer there may be used the functionality of IEEE 802.11e which includes quality of service QoS functionalities for wireless LANs by treating packets differently according to their priority. In addition thereto or alternatively there may be performed an adaptation at the physical layer. This may be done by choosing a suitable modulation method depending on the priority of the packet to be transmitted. E.g for higher priority packets a modulation method which is more resilient against distortions but has less throughput may be chosen, such as e.g. BPSK, whereas for packets having a lower priority a modulation method having correspondingly higher throughput but being less resilient against distortions, such as QPSK, may be chosen. Such an adaptation may be performed for wireless routers, including the last hop base station, in order to adapt the frame modulation to transmit more or less robust frames on the wireless channel

Regarding the adaptation by choosing the modulation method, it should be mentioned that this can also be applied to mesh networks, and intermediate routers can adapt their modulation accordingly.

The resulting outcome of the usage of some or all of the adaptation methods mentioned above is that important scenes in a movie get higher priority. This leads then to lower end-to-end delays and jitters, and to a lower drop/loss rate, thereby decreasing the risks that the end user misses these important scenes, or that the video quality suddenly degrades during sporadic channel changes (e.g entering a tunnel, channel fading etc). Generally speaking the described mechanism improves the overall performance of a video streaming system.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

## Claims

1. A method for delivering a packet-based video stream from a server to one or more users, wherein there exists a scene priority indicator file which for each video scene contains priority indications which are synchronized to the movie scenes and which indicate for a given video scene the priority of the video scene, said method comprising:
reading by the video streaming application a scene priority indicator file which for each video scene contains a corresponding scene priority indication, said corresponding scene priority indications being synchronized to the movie scenes to enable the identification of the priority indication belonging to a certain packet to be transmitted by said video stream, where a scene priority indication indicates for a given video scene the priority of the video scene;
inserting the priority indications which have been read out from said scene priority indicator file into their corresponding packets of the video stream;
adapting the handling of a packet based on said priority indication such that the delivery of a video packet having assigned a higher priority is more robust against congestions or channel degradations than the delivery of a video packet having assigned a lower priority.

2. The method of claim 1, wherein
said priority indications in said scene priority indicator file are time stamped to be synchronised with the respective scenes of the video, and/or
said scene priority indicator comprises a start time indication, an end time indication and a scene priority indicator for each scene which has assigned a priority.

3. The method of claim 1 or 2, wherein
said scene priority indications are quantized values ranging between a minimum value indicating minimum priority and a maximum value indicating maximum priority, and said adapting is performed such that the higher the priority which is assigned to the packet the more robust the packet delivery is for said packet

4. The method of one of the preceding claims, wherein
said priority indications are inserted into the type of service fields of the packets, and/or
said adapting the handling of a packet based on said priority indication is performed in multiple network layers.

5. The method of one of the preceding claims, wherein said adapting comprises one or more of the following:
adapting the error correction coding method to use a stronger error correction for those packets having a higher priority;
assigning appropriate IP and/or MAC priority parameters in accordance with the priority indications, to decrease the end-to-end delays and reduce the packet loss rate for high priority packets;
choosing a suitable radio modulation method depending on the priority of the packet to be transmitted by choosing for higher priority packets a modulation method which is more resilient for higher priority packets.

6. An apparatus for delivering a packet-based video stream from a server to one or more users, wherein there exists a scene priority indicator file which for each video scene contains priority indications which are synchronized to the movie scenes and which indicate for a given video scene the priority of the video scene, said apparatus comprising:
a module for reading by the video streaming application a scene priority indicator file which for each video scene contains a corresponding scene priority indication, said corresponding scene priority indications being synchronized to the movie scenes to enable the identification of the priority indication belonging to a certain packet to be transmitted by said video stream, where a scene priority indication indicates for a given video scene the priority of the video scene;
a module for inserting the priority indications which have been read out from said scene priority indicator file into their corresponding packets of the video stream;
a module for adapting the handling of a packet based on said priority indication such that the delivery of a video packet having assigned a higher priority is more robust against congestions or channel degradations than the delivery of a video packet having assigned a lower priority.

7. The apparatus of claim 6, wherein
said priority indications in said scene priority indicator file are time stamped to be synchronised with the respective scenes of the video, and/or
said scene priority indicator comprises a start time indication, an end time indication and a scene priority indicator for each scene which has assigned a priority.

8. The apparatus of claim 6 or 7, wherein
said scene priority indications are quantized values ranging between a minimum value indicating minimum priority and a maximum value indicating maximum priority, and said adapting is performed such that the higher the priority which is assigned to the packet the more robust the packet delivery is for said packet.

9. The apparatus of one of the claims 6 to 8, wherein
said priority indications are inserted into the type of service fields of the packets, and/or
said adapting the handling of a packet based on said priority indication is performed in multiple network layers.

10. The apparatus of one of the claims 6 to 9, wherein said module for adapting comprises one or more of the following:
a module for adapting the error correction coding method to use a stronger error correction for those packets having a higher priority;
a module for assigning appropriate IP and/or MAC priority parameters in accordance with the priority indications, to decrease the end-to-end delays and reduce the packet loss rate for high priority packets;
a module for choosing a suitable radio modulation method depending on the priority of the packet to be transmitted by choosing for higher priority packets a modulation method which is more resilient for higher priority packets

11. A computer program comprising program code which when being executed on a computer enables said computer to carry out a method according to one of claims 1 to 5.
